# FASCICULE DE BREVET EUROPEEN

(11) **EP 0 461 031 B1**
(45) Date de publication et mention de la délivrance du brevet: **29.12.1993**
(21) Numéro de dépôt: 91401468.3
(22) Date de dépôt: 05.06.1991
(51) Int. Cl.: B60Q 1/04

(54) **Dispositif et procédé pour le montage automatique d'un équipment sur support, et plus particulièrement d'un dispositif d'éclairage et/ou de signalisation sur un véhicule automobile**
Einrichtung und Verfahren zur automatischen Montage eines Apparates auf einen Träger, insbesondere für Leucht- und Warneinrichtungen für Kraftfahrzeuge
Device and method for automatic mounting of equipment on a support, particularly for lighting or warning devices on a vehicle

(30) Priorité: 08.06.1990 FR 9007129
(43) Date de publication de la demande: 11.12.1991
(73) Titulaire: VALEO VISION, 93012 Bobigny Cédex (FR)
(72) Inventeur: Robert, François, Michery, F-89140 Pont-sur-Yonne (FR)
(74) Mandataire: Lemaire, Marc

(56) Documents cités:
- FR-A- 1 436 817

## Description

La présente invention concerne un dispositif et un procédé pour le montage automatique d'un équipement sur un support, et plus particulièrement d'un dispositif d'éclairage et/ou de signalisation sur un véhicule automobile.

De tels équipements automobiles sont usuellement montés sur les véhicules au moyen de systèmes vis-écrou.

La recheche de moyens de montage automatisés conduit à l'adoption d'autres systèmes de montage.

On connait des systèmes de montage d'équipements automobiles au moyen de clips.

S'agissant d'équipements tels qu'un dispositif d'éclairage et/ou de signalisation, relativement lourds et encombrants, soumis à des élévations de température en service, lesdits clips de fixation doivent présenter des caractéristiques de résistance et d'élasticité suffisantes afin qu'ils ne se détériorent pas au montage et qu'ils conservent toutes leurs caractéristiques malgré les variations de température.

Pour ces raisons, on utilise des clips métalliques.

Au cours du montage d'un tel équipement, au moyen de clips métalliques, il arrive fréquemment que par suite d'un léger décalage lors de la présentation des clips en face d'orifices de clipage, il se produise un frottement des clips métalliques sur le support de l'équipement.

Il en résulte un endommagement des revêtements anti-corrosion que présente habituellement un tel support, ce qui entraîne des risques de corrosion dudit support.

De plus, le démontage d'un tel équipement est rendu difficile et nécessite l'utilisation d'un outillage adapté.

Il a déjà été proposé, par le document FR-A-1 436 817, correspondant au préambule de la revendication 1, de fixer la partie mobile d'un projecteur au moyen de vis dont la tête et une collerette délimitent une gorge apte à coopérer en retenue avec un rebord en forme de trou de serrure formé dans un support. Les demensions respectives de la tête de vis et du rebord en forme de trou de serrure sont adaptées à permettre le passage de la tête de vis dans la partie de plus grand diamètre du rebord alors que la partie de plus petit diamètre coopèrant avec la gorge empêche le passage de la tête et de la collerette de la vis.

La présente invention a pour but d'éviter les inconvénients susmentionnés.

Elle a également pour but un dispositif de montage qui permette, en cas de nécessité, le démontage et le remontage de l'équipement par l'usager, de manière paticulièrement aisée.

Le dispositif pour le montage automatique d'un équipement sur un support, selon l'invention est défini par la revendication 1.

Avantageusement, l'un au moins desdits deux flancs comporte une partie inclinée par rapport à ladite zone médiane, qui s'écarte de cette dernière vers l'extérieur en formant évasement de ladite gorge.

De préférence, lesdits moyens de blocage sont du type unidirectionnel, autorisant un déplacement dudit axe de montage dans le sens du montage dudit équipement sur le support, et interdisant un déplacement de sens opposé.

Avantageusement, lesdits moyens de blocage sont déverrouillables et comportent un système de débrayage.

Selon une autre caractéristique préférée de l'invention, au moins une butée latérale, solidaire dudit équipement, est prévue. Une telle butée latérale est adaptée à coopérer avec ledit support, et de préférence avec le contour de ladite première partie dudit orifice de montage, de manière à empêcher ou à tout le moins limiter un mouvement latéral dudit équipement une fois monté.

Avangageusement des moyens élastiques sont interposés entre ledit équipement et ledit support, et ils sont de préférence constitués par un joint élastique d'étanchéité.

Le procédé pour le montage automatique d'un équipement sur un support au moyen du dispositif de l'invention est défini par la revendication 9.

On appréciera que le dispositif et le procédé selon l'invention permettent un montage automatique entièrement réalisé depuis l'extérieur du véhicule, sans qu'il soit besoin d'une quelconque intervention complémentaire pratiquée à l'intérieur de ce dernier, en particulier à l'intérieur du coffre.

On appréciera également que le dispositif et le procédé ne nécessitent avantageusement pas de réaliser les différents éléments contribuant au montage avec une très grande précision.

Le dispositif, selon l'invention, permet en outre un démontage et un remontage particulièrement aisés.

D'autres caractéristiques et avantages de l'invention apparaitront dans la description d'un exemple de réalisation et d'une variante, en regard des dessins annexés dans lesquels :
- la figure 1 représente, de manière schématique et en perspective, un bloc de feux de signalisation de véhicule automobile et une partie de paroi de coffre destinée à le recevoir ;
- la figure 2 est une vue correspondant à une coupe selon la ligne II-II de la figure 3, d'une bague de maintien du dispositif de montage ;
- la figure 3 est une vue en perspective avec éclatement et coupe partiels, de cette bague de maintien ;
- les figures 4 à 7 montrent le positionnement d'une telle bague de maintien au cours des différentes étapes du procédé de montage.

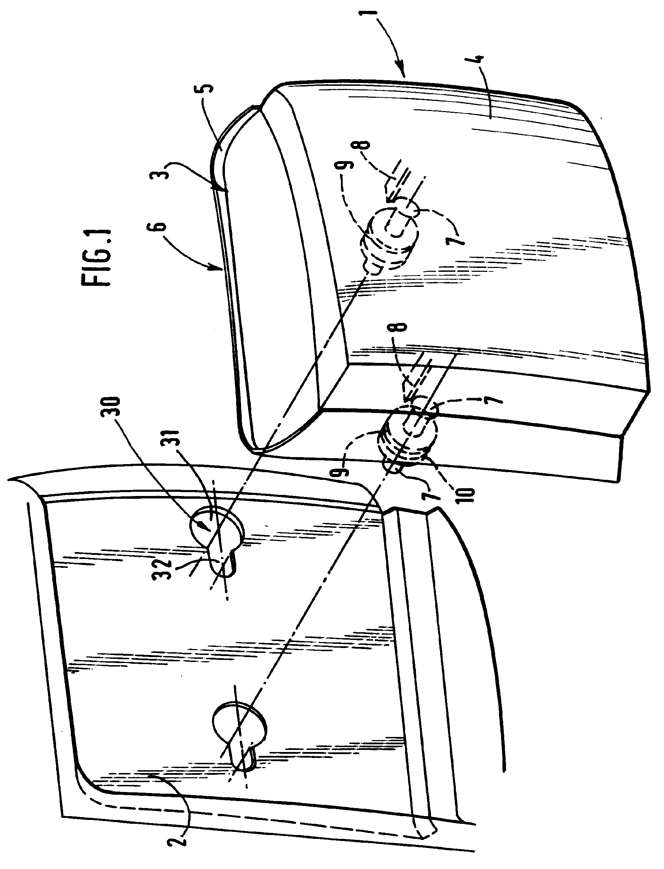

L'équipement représenté à la figure 1 est un bloc de feu de signalisation arrière 1 de véhicule automobile destiné à être monté sur un support, constitué tel que représenté par la paroi transversale arrière 2 du coffre d'un véhicule automobile.

Le bloc de feu 1 comporte un socle 3 sur lequel est rapporté un voyant 4. Le voyant 4 est formé d'une pluralité d'éléments transparents colorés ou non, correspondant à des fonctions de signalisation à éclairer.

A l'intérieur du bloc de feu 1 sont montées une pluralité d'ampoules électriques reliées à un ou plusieurs connecteurs d'alimentation électrique, non représentés.

Sur le fond 6 du socle 3, est rapporté un joint élastique 5 formant un périmètre continu.

Le joint élastique 5 a pour rôle d'assurer le montage étanche du bloc de feu 1 sur la paroi transversale arrière 2 du coffre. Il forme également des moyens élastiques interposés entre l'équipement et le support.

Du fond 6 du socle 3, à l'intérieur dudit périmètre, est issu au moins un axe de montage 7. En pratique, une pluralité d'axes de montage 7 sont prévus, deux dans l'exemple de la figure 1.

Chaque axe de montage 7 s'étend transversalement par rapport audit fond 6 du socle 3.

Dans l'exemple décrit, l'axe de montage 7 est un axe fileté. En variante, il pourrait s'agir d'un axe comportant des stries ou parties de stries, il pourrait aussi s'agir d'un axe lisse.

A au moins un axe de montage 7, est associée une butée latérale 8 solidaire dudit fond 6 du socle 3, et qui s'étend sensiblement parallèlement audit axe de montage 7, en étant disposée à l'intérieur du périmètre continu formé par le joint élastique 5.

Sur chaque axe de montage 7, sont montés des moyens de retenue 9.

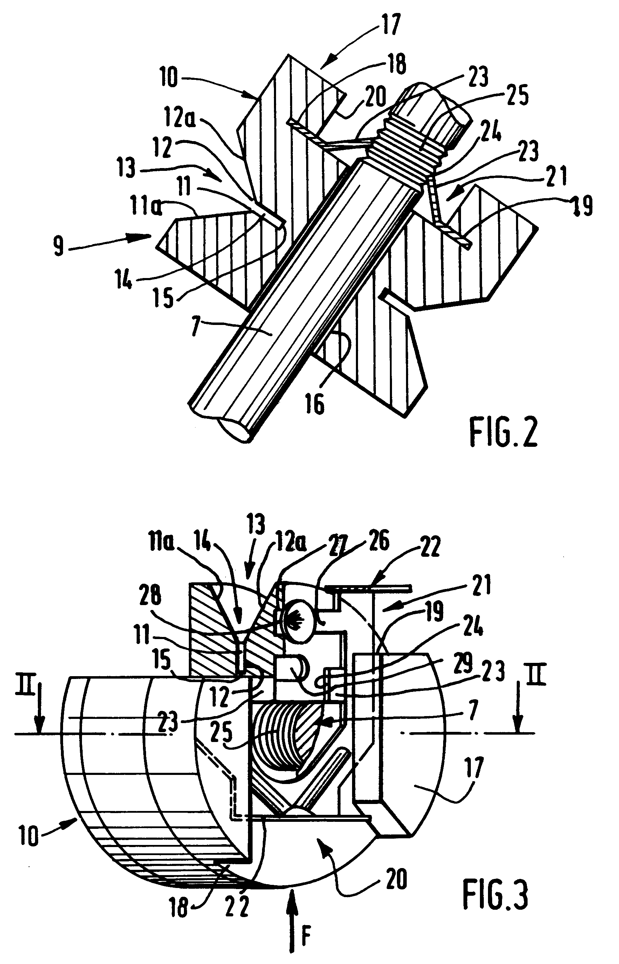

Comme on peut le voir, plus particulièrement sur les figures 2 et 3, ces moyens de retenue 9 comportent une bague de maintien 10 ayant globalement la forme d'un cylindre à section circulaire. Dans une partie longitudinalement médiane 13, la bague de maintien 10 comporte une gorge 14 séparée par deux flancs s'étendant radialement 11 et 12 en s'écartant du fond 15 de la gorge 14, lesdits flancs 11 et 12 comprennent une partie inclinée respectivement 11a et 12a, formant évasement de la gorge 14.

Ladite bague de maintien 10 présente en son centre un orifice cylindrique 16 pour permettre son engagement sur l'axe de montage 7.

Du côté de la face externe 17 de la bague de maintien 10, tournée du côté de l'extrémité dudit axe de montage 7 opposée au fond 6 du socle 3, sont ménagées deux gorges parallèles s'étendant linéairement et transversalement, et débouchant dans une fenêtre 20 transversale en forme de parallélépipède.

Une clavette 21 est montée à coulissement dans lesdites gorges parallèles 18 et 19. Ladite clavette de verrouillage 21 forme des moyens de blocage déverrouillables.

Comme on le voit plus particulièrement à la figure 3, la clavette 21 se présente sous la forme d'un flanc de tôle ajouré globalement plan, inséré dans lesdites gorges parallèles 18 et 19, et comportant deux retours 22 de manoeuvre perpendiculaires auxdits flancs de tôle.

Deux pattes opposées 23 sont issues de la périphérie de ladite clavette en s'écartant desdites gorges 18 et 19, et en étant inclinées vers l'extérieur par rapport au fond de tôle de la clavette 21. Lesdites pattes 23 ménagent entre elles un espace inférieur au diamètre extérieur dudit axe de montage.

En pratique, et comme représenté, lesdites pattes inclinées 23 pénètrent par leurs extrémités 24 dans des filets 25 de l'axe de montage 7.

L'inclinaison des pattes 23 est telle qu'elles autorisent un mouvement de l'axe de montage 7 dans le sens de la flèche F de la figure 2, qui correspond à un enfoncement relatif de la bague de maintien 10 sur l'axe de montage 7.

La clavette 21 comporte en outre une patte élastique de blocage 26 comportant à son extrémité un renflement 27 susceptible de coopérer en blocage avec l'un ou l'autre de deux creux d'indexation 28,29 ménagés en correspondance sur le fond de la fenêtre 20 de la bague de maintien 10.

La clavette de verrouillage 21 est ainsi déplaçable de l'une à l'autre de deux positions correspondant à une première situation où lesdites pattes 23 sont, comme décrit précédemment, engagées dans les filets 25 de l'axe de montage 7, et dans une deuxième situation où lesdites pattes inclinées 23 sont latéralement dégagées desdits filets 25.

Cette deuxième situation correspond au déverrouillage desdits moyens de blocage et les éléments permettant un déplacement de la première situation vers la deuxième situation forment un système de débrayage. La manoeuvre de la clavette 21 vers l'une ou l'autre des deux dites situations est facilitée par les retours de manoeuvre 22.

La paroi arrière 2 du coffre du véhicule est percée d'orifices de montage 30 en nombre et en positions relatives identiques à celles des axes de montage 7 que comporte le bloc de feu 1.

Chaque orifice de montage 30 comprend une première partie 31, circulaire telle que représentée, dont les dimensions, ou diamètre, sont supérieures aux dimensions de chacune desdites bagues de maintien 10 de manière à pouvoir être traversé par celles-ci.

Ladite première partie 31 de chacun des orifices de montage 30 est prolongée latéralement par une seconde partie 32, plus étroite et allongée. L'orifice de montage 30 présente ainsi la forme d'un trou de serrure.

La largeur de ladite seconde partie 32, inférieure au diamètre de la bague de maintien 10, est légèrement supérieure à la zone médiane 13 de ladite bague de maintien 10.

La largeur de la gorge 14 est par ailleurs légèrement supérieure à l'épaisseur de ladite paroi arrière 2 du coffre.

Les dispositions ci-dessus permettent une introduction longitudinale de la bague de maintien 10 dans la première partie 31 de l'orifice de montage 30, puis, par déplacement latéral vers la seconde partie 32 de l'orifice de montage 30, une retenue longitudinale de la bague de maintien 10, dans les deux sens, par coopération des flancs 11 et 12 de la bague de maintien 10 avec l'une et l'autre des faces de la paroi arrière 2 du coffre.

Dans cette position où la bague de maintien 10 est retenue longitudinalement dans les deux sens par la paroi arrière 2 du coffre, il est possible de rapprocher le bloc de feux de signalisation 1 de cette dernière paroi arrière 2, mais il est impossible au contraire de l'en écarter.

La hauteur de la butée latérale 8, d'une part, et l'espacement latéral entre cette dernière et l'axe de montage 7 correspondant, sont tels qu'une fois fixé le bloc de feux de signalisation, ladite butée latérale 8 est engagée dans ladite première partie 31 de l'orifice de montage 30 de manière à empêcher ou à tout le moins limiter tout mouvement latéral de la bague de maintien 10 de la première partie 31 vers la seconde partie 32 de l'orifice de montage, ce qui assure tout échappement intempestif de la bague de maintien 10 et, partant, du bloc de feux de signalisation.

La longueur de l'axe de montage 7, la hauteur de la butée latérale 8 et l'épaisseur-du joint élastique 5 sont telles que, d'une part, l'axe de montage 7 est plus long que la butée latérale 8 et que, d'autre part, la butée latérale 8 dépasse légèrement le joint élastique 5, même quand ce dernier est en position non comprimée.

Avant que le bloc de feu de signalisation 1 ne soit monté sur le véhicule, les différents éléments de ce bloc 1 participant au montage sont positionnés comme indiqué ci-après.

Sur chaque axe de montage 7 est enfilée une bague de maintien 10. La bague de maintien 10 est verrouillée sur l'axe de montage au moyen de la clavette de verrouillage 21, dans une position telle que le flanc 11 de la gorge 14, qui se trouve du côté du bloc de feu 1, est sensiblement au même niveau que l'extrémité de la butée latérale 8.

En variante non représentée, la gorge 14 de la bague de maintien 10 présente une élasticité axiale et sa largeur correspond ou est légèrement inférieure à l'épaisseur de ladite paroi arrière 2 du coffre.

De la sorte, une fois engagée de part et d'autre de la paroi 2 la bague de maintien 10 qui enserre élastiquement cette dernière, est freinée à l'encontre d'un éventuel déplacement latéral.

En variante également, non représentée, au moins un, et de préférence deux axes de maintien 7 comportent chacun un épanouissement transversal sensiblement à leur mi-hauteur adapté à former une butée destinée à coopérer avec une bague de maintien 10 de manière à limiter l'enfoncement desdits axes de maintien 7 en fin de montage du bloc de feu de signalisation 1.

Avantageusement un tel épanouissement est constitué par un écrou solidarisé à l'axe de maintien 7.

La portion longitudinale dudit épanouissement transversal est telle que ce dernier se situe à une distance du socle 3 du bloc de feux de signalisation 1, inférieure à celles des éléments suivants : butée latérale 8, extrémité du joint élastique 5.

On va maintenant décrire le procédé de montage automatique d'un équipement constitué du bloc de feux de signalisation 1 décrit précédemment sur un véhicule, et plus particulièrement sur la paroi arrière du coffre 2 de ce véhicule.

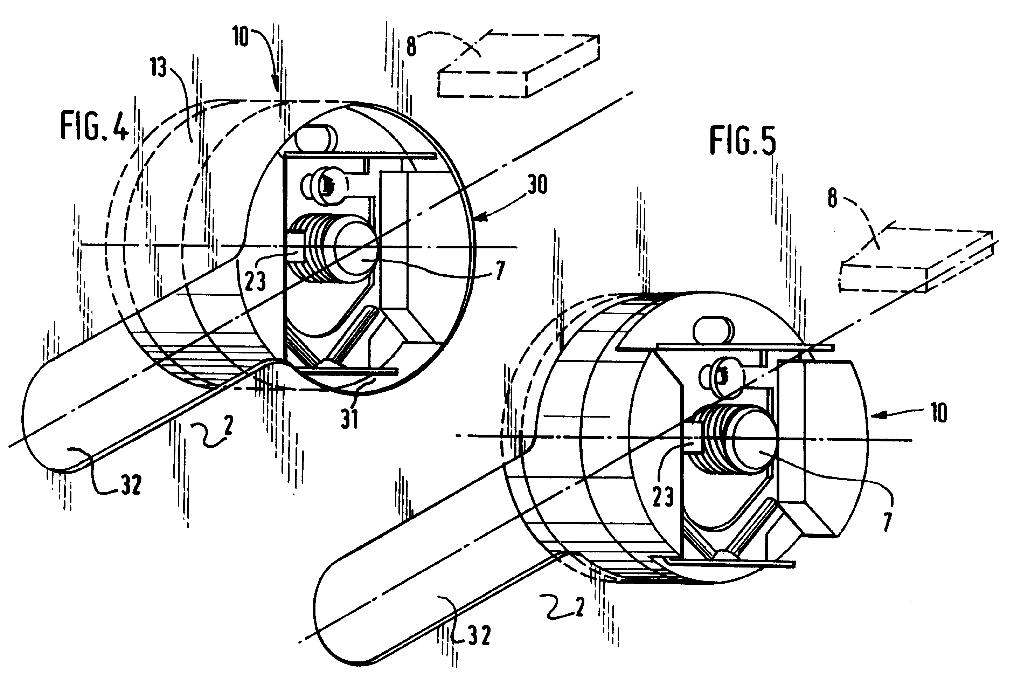

Le bloc de feux de signalisation 1, tel que décrit précédemment, avec les bagues de maintien 10 dans la position indiquée ci-dessus, est présenté de préférence par des moyens automatiques tels que robot, devant son emplacement de destination prévu sur la paroi arrière du coffre 2 (figure 4).

Au cours de cette présentation, les bagues de maintien 10 sont placées en correspondance de la première partie 31 des orifices de montage 30.

Le mouvement de présentation est poursuivi jusqu'à ce que les bagues de maintien 10 pénètrent dans lesdites premières parties 31 et jusqu'à ce que les butées latérales 8 viennent, par leur extrémité, en appui contre ladite paroi du coffre 2 (figure 5).

A ce moment-là, les gorges 14 des bagues de maintien 10 sont placées sensiblement au droit de la paroi du coffre, ou à tout le moins au droit des parties inclinées 11a, 12a, des flancs 11 et 12 desdites gorges 14.

Comme les butées latérales 8 dépassent légèrement le joint élastique 5, ce dernier n'est alors pas encore comprimé.

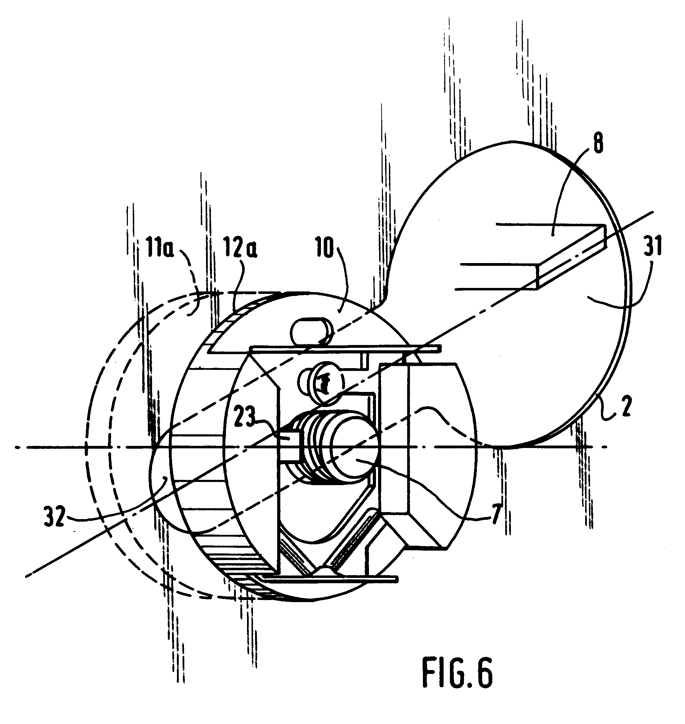

On procède alors à un déplacement latéral dans un plan perpendiculaire à la direction du mouvement précédent de l'ensemble du bloc de feux, de telle sorte que les bagues de maintien 10 s'engagent dans la seconde partie 32 des orifices de montage 30, la paroi du coffre 2 étant alors reçue dans les gorges 14 desdites bagues de maintien 10 (figure 6).

Il en résulte que lesdites bagues de maintien 10 sont retenues dans les deux sens longitudinaux, par la paroi du coffre.

Au cours de ce mouvement latéral, les butées latérales 8 se déplacent en frottant contre la paroi du coffre 2. Ce mouvement se fait à frottement doux, et, les butées latérales étant en matière plastique, il n'en résulte aucun dommage pour le revêtement anti-corrosion dont est revêtue la paroi arrière du coffre 2.

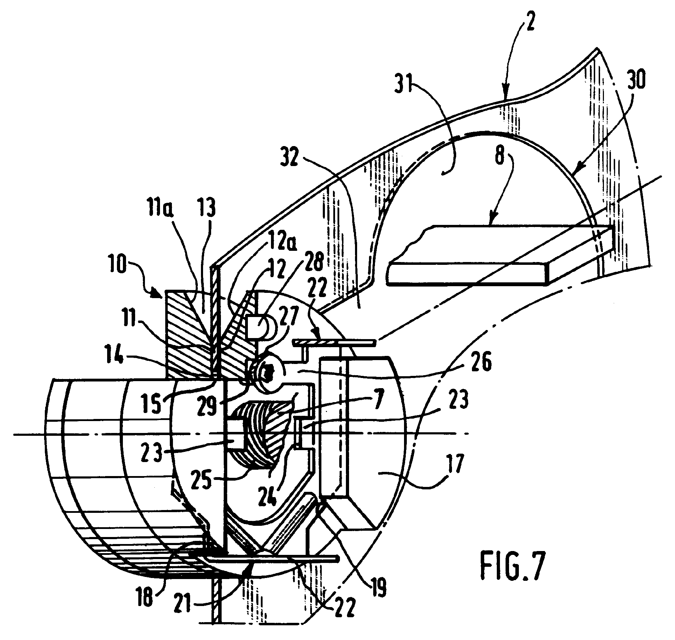

En fin de mouvement latéral, les butées latérales 8 se trouvent face à la première partie 31 des orifices de montage 30 (figure 7).

Le bloc de feu de signalisation 1 est alors soumis à une nouvelle poussée longitudinale dont l'effort est dosé de manière à correspondre à un écrasement prédéterminé du joint élastique 5.

En variante cette dernière poussée longitudinale est limitée en amplitude par venue en butée contre les bagues de maintien 10 d'épanouissements transversaux des axes de maintien 7.

Au cours de ce dernier mouvement longitudinal, les bagues de maintien 10 retenues par la paroi arrière du coffre 2 sont immobiles et les axes de montage 7 se déplacent à l'intérieur des bagues de maintien 10 dans le sens autorisé par les moyens de verrouillage unidirectionnels.

Le montage est alors terminé et le bloc de feux de signalisation 1 est maintenu fermement, élastiquement et à étanchéité contre la paroi arrière du coffre 2, sans qu'il soit possible de le démonter par simple traction effectuée sur le bloc de feux de signalisation, les moyens de verrouillage unidirectionnels décrits précédemment s'opposant à un tel retrait.

Tout mouvement latéral est par ailleurs empêché par la coopération d'au moins une butée latérale 8 avec le contour de la première partie 31 de l'orifice de montage 30 correspondant.

Comme on va le voir ci-après, le dispositif selon l'invention permet un démontage et un remontage particulièrement aisés lorsqu'il est nécessaire d'intervenir sur le bloc de feux de signalisation, par exemple pour changer une lampe.

Le démontage s'effectue en débrayant les moyens de verrouillage unidirectionnels.

Pour ce faire, il suffit d'agir sur les retours de manoeuvre 22 de chaque clavette de verrouillage 21, dans le sens de la flèche F de la figure 3, pour les amener dans la situation où, comme représenté sur cette même figure 3, les pattes inclinées 23 de chaque clavette 21 sont latéralement dégagées des filets 25 ménagés sur les axes de montage 7.

Il suffit alors d'exercer une traction longitudinale sur ledit bloc de feux pour l'extraire, les bagues de maintien 10 restant alors maintenues par la paroi arrière 2 du coffre.

Comme on le voit, une telle opération de démontage est particulièrement simple et rapide, et ne nécessite aucun outillage.

Le remontage du bloc de feux de signalisation 1 peut ensuite s'effectuer de différentes manières.

Les bagues de maintien 10 étant restées dans leur position de fin de montage automatique, les clavettes de verrouillage 21 sont alors remises dans une position correspondant à un engagement des pattes inclinées 23 dans les filets 25 de chaque axe de montage 7.

Le bloc de feux est ensuite présenté manuellement, de telle sorte que les axes de montage 7 pénètrent dans les orifices cylindriques 16 des bagues de maintien 10, il suffit alors d'exercer une poussée suffisante pour appliquer le bloc de feux de signalisation contre la paroi arrière du coffre 2 en comprimant le joint élastique 5.

En variante, le remontage peut être effectué de la même manière que le montage automatique.

Pour ce faire, il convient d'extraire les bagues de maintien 10 de la paroi arrière du coffre 2 et de les replacer chacune sur un axe de montage 7 dans la position préalable au montage automatique, tel qu'indiqué ci-dessus.

Différentes modifications peuvent être envisagées sans pour autant sortir du cadre de l'invention.

En particulier, chaque axe de montage 7 peut être un axe simplement strié, voire même un axe lisse sur lequel les pattes inclinées 23 des clavettes de verrouillage 21 seraient amenées à s'arc-bouter pour interdire un mouvement dans le sens du démontage mais autoriser un mouvement dans le sens du montage, c'est-à-dire de l'enfoncement des axes de montage 7 dans les bagues de maintien 10.

## Revendications

1. Dispositif pour le montage automatique d'un équipement sur un support, et plus particulièrement d'un dispositif d'éclairage et/ou de signalisation (1) sur un véhicule, du type comprenant au moins un axe de montage (7) destiné à traverser une paroi dudit support (2) à la faveur d'un orifice de montage (30) ménagé dans ce dernier et des moyens de retenue (9) aptes à prendre appui sur ladite paroi (2) de manière à assurer la fixation dudit équipement (1), dans lequel :
a) ledit orifice de montage (30) est en forme de trou de serrure et il est formé d'une première partie (31) dont les dimensions transversales sont adaptées à permettre un libre passage desdits moyens de retenue (9), et d'une seconde partie (32) prolongeant latéralement ladite première partie (31), dont les dimensions sont inférieures à celles desdits moyens de retenue (9), de manière à assurer un maintien desdits moyens de retenue (9) ;
b) lesdits moyens de retenue (9) sont constitués par une bague de maintien (10) comportant deux flancs (11,12) s'étendant radialement, séparés par une zone médiane (13) formant gorge (14), de dimensions transversales inférieures à celles de ladite seconde partie (31) et dont l'étendue longitudinale est au moins égale à celle de l'épaisseur correspondante de ladite paroi du support (2) ; lesdits flancs (11,12) étant aptes à s'engager de part et d'autre de ladite paroi du support (2) de manière à permettre la retenue de la bague de maintien (10) dans les deux sens longitudinaux ;
caractérisé en ce que lesdits moyens de retenue (9) sont aptes à s'engager sur ledit axe de montage (7) et comprennent des moyens déverrouillables (21) de blocage dudit axe de montage (7) dans les moyens de retenue (9).

2. Dispositif selon la revendication 1, caractérisé en ce que l'un au moins desdits deux flancs (11,12) comporte une partie inclinée par rapport à ladite zone médiane (13), qui s'écarte de cette dernière vers l'extérieur en formant un évasement de ladite gorge (14).

3. Dispositif selon la revendication 1 ou 2, caractérisé en ce que lesdits moyens de blocage déverrouillables (21) sont des moyens de blocage du type unidirectionnels, autorisant un déplacement dudit axe de montage (7) dans le sens du montage dudit équipement (1) sur le support (2), et interdisant un déplacement de sens opposé.

4. Dispositif selon l'une des revendications précédentes, caractérisé en ce que lesdits moyens de blocage (21) comportent un système de débrayage (22,23,26,27,28,29).

5. Dispositif selon la revendication 4, caractérisé en ce que lesdits moyens de blocage déverrouillables comportent une clavette (21) montée à coulissement dans des gorges parallèles (18,19) ménagées dans ladite bague de maintien (10), comportant au moins deux pattes opposées (23) issues de la périphérie de ladite clavette en s'écartant desdites gorges (18,19) et en étant inclinées vers l'extérieur par rapport au plan de la clavette (21) et ménageant entre elles un espace inférieur au diamètre extérieur dudit axe de montage (7).

6. Dispositif selon l'une quelconque des revendications précédentes, caractérisé par au moins une butée latérale (8) solidaire dudit équipement (1), adapté à coopérer avec ledit support (2) et avec le contour de ladite première partie (31) dudit orifice de montage (30).

7. Dispositif selon l'une quelconque des revendications précédentes, caractérisé en ce qu'il comporte des moyens élastiques interposés entre ledit équipement (1) et ledit support (2), constitué par un joint élastique d'étanchéité (5), formant un périmètre continu à l'intérieur duquel sont issus lesdits axes de montage (7) et lesdites butées latérales (8).

8. Dispositif selon la revendication 7 prise dans sa dépendance de la revendication 6, caractérisé en ce que la longueur de l'axe de montage (7), la hauteur de la butée latérale (8), et l'épaisseur du joint élastique (5) sont telles que, d'une part, l'axe de montage (7) est plus long que la butée latérale (8) et que, d'autre part, la butée latérale (8) dépasse légèrement le joint élastique (5) même quand ce dernier est en position non comprimée.

9. Procédé pour le montage automatique d'un équipement sur un support, et plus particulièrement d'un dispositif d'éclairage et/ou de signalisation sur un véhicule automobile, au moyen d'un dispositif de montage selon l'une quelconque des revendications précédentes, caractérisé par la succession des opérations suivantes :
a) au moins une bague de maintien (10) est enfilée sur un axe de montage (7) de l'équipement (1) ;
b) l'équipement (1) est présenté devant son emplacement de destination prévu sur une paroi (2) du véhicule, de telle sorte que chaque bague de maintien (10) soit placée en correspondance d'une première partie (31) d'un orifice de montage (30) ménagé dans la paroi (2) du véhicule ;
c) le mouvement de présentation est poursuivi jusqu'à ce que chaque bague de maintien (10) pénètre dans ladite première partie (31) et jusqu'à ce qu'au moins une butée latérale (8) vienne par son extrémité en appui contre ladite paroi (2) du véhicule ;
d) un déplacement latéral dans un plan perpendiculaire à la direction du mouvement précédent est réalisé, de telle sorte que chaque bague de maintien (10) s'engage dans une seconde partie (32) d'un orifice de montage (30), en sorte que la paroi est alors reçue dans une gorge (14) de chaque bague de maintien (10) ;
e) l'équipement (1) est soumis à une nouvelle action longitudinale dont l'effort et/ou l'amplitude est dosé de manière à correspondre à un écrasement prédéterminé de moyens élastiques (5), tel qu'un joint élastique, et de telle manière qu'au cours de ce dernier mouvement longitudinal, chaque bague de maintien (10), retenue par la paroi du véhicule (2), est immobile et que chaque axe de montage (7) se déplace à l'intérieur de cette dernière.

## Patentansprüche

1. Einrichtung zur automatischen Montage eines Apparates auf einen Träger, insbesondere für Leucht- und/oder Warneinrichtungen für Kraftfahrzeuge, enthaltend wenigstens eine Montageachse (7), die dazu bestimmt ist, durch eine Wandung des genannten Trägers (2) mittels einer Montageöffnung (30) hindurchzutreten, die im Träger vorgesehen ist, sowie Haltemittel (9), die sich so auf der genannten Wandung (2) abstützen können, daß die Befestigung des genannten Apparates (1) gewährleistet ist, wobei:
a) die genannte Montageöffnung (30) die Form eines Schlüssellochs hat und aus einem ersten Teil (31) besteht, dessen Querabmessungen geeignet sind, den freien Durchtritt der genannten Haltemittel (9) zu ermöglichen, und einem zweiten Teil (32), der den genannten ersten Teil (31) in seitlicher Richtung verlängert, deren Abmessungen kleiner sind als die der genannten Haltemittel (9), so daß eine Befestigung der genannten Haltemittel (9) gewährleistet ist,
b) die genannten Haltemittel (9) aus einem Haltering (10) bestehen, der zwei in radialer Richtung verlaufende Flanken (11, 12) enthält, die durch eine als Rille (14) ausgebildete mittlere Zone (13) getrennt sind, deren Querabmessungen kleiner sind als die des genannten zweiten Teils (32) und deren Längsausdehnung wenigstens gleich derjenigen der Dicke ist, die der genannten Wand des Trägers (2) entspricht, wobei die genannten Flanken (11, 12) geeignet sind, beiderseits der genannten Wand des Trägers (2) so einzurasten, daß der Haltering (10) in beiden Längsrichtungen festgehalten werden kann, **dadurch gekennzeichnet**, daß die genannten Haltemittel (9) geeignet sind, an der genannten Montageachse (7) einzugreifen, und entriegelbare Blockiermittel (21) für die genannte Montageachse (7) in den Haltemitteln (9) enthalten.

2. Einrichtung nach Anspruch 1, **dadurch gekennzeichnet**, daß wenigstens eine der genannten Flanken (11, 12) einen im Verhältnis zur mittleren Zone (13) geneigten Teil enthält, der sich von letzterer nach außen entfernt und eine konische Erweiterung der genannten Rille (14) bildet.

3. Einrichtung nach Anspruch 1 oder 2, **dadurch gekennzeichnet**, daß die genannten entriegelbaren Blockiermittel (21) in einer Richtung wirksame Blockiermittel sind, die eine Verschiebung der genannten Montageachse (7) in Montagerichtung des genannten Apparates (1) am Träger (2) erlauben und eine Verschiebung in entgegengesetzter Richtung unmöglich machen.

4. Einrichtung nach einem der vorherigen Ansprüche, **dadurch gekennzeichnet**, daß die genannten Blockiermittel (21) ein Ausrücksystem (22, 23, 26, 27, 28, 29) einschließen.

5. Einrichtung nach Anspruch 4, **dadurch gekennzeichnet**, daß die genannten entriegelbaren Blockiermittel einen Keil (21) enthalten, der gleitend in parallel verlaufenden Rillen (18, 19) angebracht ist, die im genannten Haltering (10) vorgesehen sind, enthaltend wenigstens zwei einander gegenüberliegende Klammern (23), die von der Peripherie des genannten Teils ausgehen und sich von den genannten Rillen (18, 19) entfernen und dabei im Verhältnis zur Ebene des Keils (21) nach außen geneigt sind und dazwischen einen Raum bilden, der kleiner ist als der Außendurchmesser der genannten Montageachse (7).

6. Einrichtung nach einem der vorherigen Ansprüche, **gekennzeichnet** **durch** wenigstens einen fest mit dem genannten Apparat (1) verbundenen, seitlichen Anschlag (8), der geeignet ist, mit dem genannten Träger (2) und mit der Kontur des genannten ersten Teils (31) der genannten Montageöffnung (30) zusammenzuwirken.

7. Einrichtung nach einem der vorherigen Ansprüche, **dadurch gekennzeichnet**, daß sie elastische Mittel zwischen dem genannten Apparat (1) und dem genannten Träger (2) enthält, bestehend aus einem elastischen Dichtungsring (5), der einen durchgehenden Kreisumfang bildet, von dessen Innenseite die genannten Montageachsen (7) und die genannten seitlichen Anschläge (8) ausgehen.

8. Einrichtung nach Anspruch 7, in Abhängigkeit vom Anspruch 6 betrachtet, **dadurch gekennzeichnet**, daß die Länge der Montageachse (7), die Höhe des seitlichen Anschlags (8) und die Dicke des elastischen Rings (5) so beschaffen sind, daß einerseits die Montageachse (7) länger ist als der seitliche Anschlag (8) und daß andererseits der seitliche Anschlag (8) etwas über den elastischen Ring (5) hinausreicht, auch wenn letzterer sich im nicht zusammengedrückten Zustand befindet.

9. Verfahren zur automatischen Montage eines Apparates auf einen Träger, insbesondere für Leucht- und/oder Warneinrichtungen für Kraftfahrzeuge, mit Hilfe einer Montageeinrichtung nach einem der vorherigen Ansprüche, **gekennzeichnet** **durch** die Aufeinanderfolge der nachstehenden Operationen:
a) wenigstens ein Haltering (10) wird auf eine Montageachse (7) des Apparates (1) aufgeschoben,
b) der Apparat (1) wird vor seinem vorgesehenen Einbau an einer Wand (2) des Fahrzeugs so angeordnet, daß jeder Haltering (10) einem ersten Teil (31) einer Montageöffnung (30) entspricht, die in der Wandung (2) des Fahrzeugs angebracht ist,
c) die Funktionsbewegung wird soweit fortgesetzt, daß jeder Haltering (10) in den genannten ersten Teil (31) eindringt und wenigstens ein seitlicher Anschlag (8) mit seinem Ende an der genannten Wandung (2) des Fahrzeugs zur Anlage kommt,
d) es erfolgt eine seitliche Verschiebung in einer Ebene lotrecht zur vorherigen Bewegungsrichtung, in der Form, daß jeder Haltering (10) in einen zweiten Teil (32) einer Montageöffnung (30) eingreift, so daß die Wand dann von einer Rille (14) in jedem Haltering (10) aufgenommen wird,
e) der Apparat (1) wird einer neuerlichen Längseinwirkung ausgesetzt, deren Kraft und/oder Amplitude so dosiert ist, daß sie einer festgelegten Druckverformung von elastischen Mitteln (5), wie zum Beispiel eines elastischen Rings, entspricht, und in der Weise, daß während dieser letztgenannten Längsbewegung jeder von der Wandung des Fahrzeugs (2) festgehaltene Haltering (10) unbeweglich ist und daß sich jede Montageachse (7) in das Innere der letzteren hineinbewegt.

## Claims

1. A device and method for automatic mounting of equipment on a support, and more particularly of a lighting or warning device (1) on a vehicle, of the type comprising at least one mounting pin (7) intended to pass through a wall of said support (2) by means of a mounting aperture (30) provided in the latter and retention means (9) able to rest against said wall (2) in order to ensure the attachment of said equipment (1), in which:
a) the said mounting aperture (30) is shaped like a keyhole and is formed by a first part (31), the transversal dimensions of which are adapted to enable a free passage of said retention means (9), and a second part (32) laterally extending the said first part (31), the dimensions of which are less than those of said retention means, so as to ensure said retention means (9) are kept in position;
(b) the said retention means (9) are formed by a supporting ring (10) comprising two flanks (11, 12) extending radially, separated by a median zone (13) forming a groove (14), having transversal dimensions less than those of said second part (31) and the longitudinal extension of which is at least equal to that of the corresponding thickness of said wall of the support (2); the said flanks (11, 12) being able to engage on both sides of said wall of the support (2) in order to permit the retention of the supporting ring (10) in the two longitudinal directions;
**characterised in that** the said retention means (9) are able to engage on said mounting pin (7) and comprise disengageable locking means (21) for said mounting pin (7) in the retention means (9).

2. A device according to Claim 1,
**characterised in that** at least one of said two flanks (11, 12) comprises a part inclined with respect to said median zone (13), which diverges from the latter towards the outside by forming a widening of said groove (14).

3. A device according to Claim 1 or 2,
**characterised in that** said disengageable locking means (21) are locking means of the unidirectional type, permitting a displacement of said mounting pin (7) in the direction of the mounting of said equipment (1) on the support (2), and preventing a displacement in the opposite direction.

4. A device according to one of the above Claims,
**characterised in that** said locking means (21) comprise a clutch throwout system (22, 23, 26, 27, 28, 29).

5. A device according to Claim 4,
**characterised in that** said disengageable locking means comprise a key (21) slidably mounted in parallel grooves (18, 19) provided in said supporting ring (10), comprising at least two opposite lugs (23) protruding from the periphery of said key by diverging from said grooves (18, 19) and by being inclined towards the outside with respect to the plane of the key (21) and between them providing a space less than the external diameter of said mounting pin (7).

6. A device according to any one of the above Claims,
**characterised by** at least one lateral stop (8) integral with said equipment (1), adapted to cooperate with said support (2) and with the contour of said first part (31) of said mounting aperture (30).

7. A device according to any one of the above Claims,
**characterised in that** it comprises elastic means inserted between said equipment (1) and said support (2), formed by a elastic seal (5), forming a continuous perimeter inside which said mounting pins (7) and said lateral stops (8) protrude.

8. A device according to Claim 7 taken in its dependence on Claim 6,
**characterised in that** the length of the mounting pin (7), the height of the lateral stop (8), and the thickness of the elastic seal (5) are such that, firstly, the mounting pin (7) is longer than the lateral stop (8) and that, secondly, the lateral stop (8) slightly protrudes past the elastic seal (5) even when the latter is in a non-compressed position.

9. A method for the automatic mounting of equipment on a support, and more particularly of a lighting and/or warning device on a vehicle, by means of a mounting device according to any one of the above Claims,
**characterised by** the sequence of the following operations:
a) at least one supporting ring (10) is threaded onto a mounting pin (7) of the equipment (1);
b) the equipment (1) is presented in front of its intended location provided on a wall (2) of the vehicle, so that each supporting ring (10) is placed to correspond with a first part (31) of a mounting aperture (30) made in the wall (2) of the vehicle;
c) the presentation movement is continued until each supporting ring (10) penetrates into said first part (31) and until at least one lateral stop (8) comes with its end to abut against said wall (2) of the vehicle;
d) a lateral displacement in a plane perpendicular to the direction of the preceding movement is performed, so that each supporting ring (10) engages in a second part (32) of a mounting aperture (30), so that the wall is then housed in a groove (14) of each supporting ring (10);
e) the equipment (1) is subject to a new longitudinal action, the effort and/or the amplitude of which is gauged so as to correspond to a predetermined crushing of elastic means (5), such as an elastic seal, and so that during this latter longitudinal movement each supporting ring (10), retained by the wall of the vehicle (2), is stationary and so that each mounting pin (7) moves inside the latter.
